# DEMANDE DE BREVET EUROPEEN

(11) **EP 0 972 955 A2**
(43) Date de publication de la demande: **19.01.2000**
(21) Numéro de dépôt: 99870135.3
(22) Date de dépôt: 01.07.1999
(51) Int. Cl.: F16B 37/04, F16B 5/02

(54) **Dispositif de fixation par écrou**

(30) Priorité: 01.07.1998 BE 9800499
(71) Demandeur: van Zuylen Motorsport (V.Z.M.), 6698 Grand-Halleux (BE)
(72) Inventeur: Dimitroff, Roger, 4020 Liege (BE)
(74) Mandataire: Thirion, Robert

(57) **Abrégé**

Dispositif de fixation sur une pièce (1), à laquelle est associé au moins un goujon (7), d'au moins une pièce (4) munie d'une ouverture (5) livrant passage à l'extrémité libre (6) du goujon, comprenant un écrou (8) agencé pour, lorsqu'il est serré sur le goujon, appliquer cette pièce (4) sur la pièce (1) afin de les immobiliser l'une par rapport à l'autre, la pièce (4) présentant un évidement (9), coaxial à l'ouverture (5), ménagé sur une partie de son épaisseur, pour que l'extrémité libre (6) du goujon soit située dans l'évidement lorsque les deux pièces (1, 4) sont rapprochées l'une de l'autre et pour que l'écrou soit au moins partiellement logé dans l'évidement et puisse y tourner librement autour de son axe, des moyens (12) étant prévus pour maintenir l'écrou prisonnier de l'évidement (9), lorsqu'il est désserré et dégagé du goujon (7), dans une position sensiblement coaxiale à l'ouverture (5).

## Description

La présente invention a pour objet un dispositif de fixation sur une première pièce, à laquelle est associé, par une de ses extrémités, au moins un élément saillant fileté tel qu'un goujon, d'au moins une seconde pièce pourvue d'une ouverture destinée à livrer passage à l'extrémité libre dudit goujon, comprenant un écrou agencé de manière à prendre appui sur la seconde pièce et coopérer avec l'extrémité libre du goujon pour, lorsqu'il est serré, appliquer cette seconde pièce sur la première afin d'immobiliser ces deux pièces l'une par rapport à l'autre.

Les systèmes d'assemblage et de fixation de pièces de tous types à l'aide de vis et d'écrous sont bien connus et donnent généralement entière satisfaction lorsque ces pièces sont assemblées à demeure, dans de bonnes conditions de travail et dans le cas où le facteur temps n'a pas grande importance.

Toutefois, ces systèmes présentent des inconvénients lorsque l'assemblage des pièces susdites est temporaire et que les opérations pour la mise en place et la fixation de ces dernières ainsi que pour leur démontage sont répétées à de multiples reprises et ce, surtout si lesdites opérations doivent s'effectuer dans des conditions de travail difficiles et/ou dans un laps de temps le plus court possible. En effet, lesdits systèmes réclament au moins, outre la mise en place des pièces, le choix, parmi des écrous libres, de l'écrou correspondant à chaque goujon d'assemblage, les goujons pouvant varier d'un assemblage à l'autre, ainsi que la manipulation de chaque écrou pour, d'une part, le présenter en bonne position en regard du filet du goujon correspondant et, d'autre part, l'engager sur ce dernier avant de procéder à son serrage proprement dit. Cette façon de faire, en plus du temps important requis pour les opérations précitées, entraîne des risques non négligeables de mauvais choix d'écrou pouvant conduire à la dégradation du goujon et/ou de l'écrou et finalement à un assemblage défectueux, de pertes d'écrous, etc...

L'invention a pour but de remédier à ces inconvénients et de procurer un dispositif de fixation par élément fileté et écrou qui permet de faciliter et de simplifier à l'extrême la mise en place des pièces à assembler ainsi que leur assemblage, même dans des conditions de travail défavorables, tout en éliminant le choix des écrous à utiliser ainsi que les diverses manipulations de ces derniers qui sont énumérées ci-dessus et qui sont étrangères à leur serrage proprement dit, ce qui a pour conséquence, d'une part, d'exclure notamment toute perte d'écrous et toute interversion de ceux-ci qui pourrait nuire à la fiabilité de l'assemblage et, d'autre part, de réduire, de manière considérable, le temps d'assemblage.

A cet effet, suivant l'invention, la seconde pièce précitée présente un évidement, coaxial à l'ouverture précitée, ménagé, sur une partie de l'épaisseur de cette pièce, à partir de sa face opposée à celle qui est destinée à entrer en contact avec la première pièce lorsque l'écrou est serré et qu'il prend appui sur le fond de l'évidement, la profondeur dudit évidement étant telle que, d'une part, l'extrémité libre du goujon est située dans l'évidement lorsque les deux pièces sont rapprochées l'une de l'autre et, d'autre part, l'écrou est au moins partiellement logé dans l'évidement, la section de ce dernier étant telle que l'écrou peut y tourner librement autour de son axe, des moyens étant prévus pour, d'une part, maintenir l'écrou prisonnier de l'évidement précité lorsqu'il est en position désserrée et qu'il ne coopère plus avec le goujon et, d'autre part, maintenir l'écrou sensiblement coaxial à l'ouverture susdite.

Suivant une forme de réalisation du dispositf suivant l'invention, les moyens précités permettant de maintenir l'écrou prisonnier de l'évidement précité comprennent, d'une part et à l'extrémité de l'écrou tournée vers le fond dudit évidement, une collerette dans laquelle est ménagée une rainure périphérique circulaire, un élément annulaire élastique dans le sens radial, tel qu'un joint torique, disposé dans ladite rainure et agencé pour être immobilisé dans cette dernière suivant une direction parallèle à l'axe de l'écrou et pour faire saillie à la périphérie de la collerette précitée, et, d'autre part et à l'intérieur de l'évidement susdit, à proximité de l'orifice de celui-ci, un épaulement annulaire, le diamètre interne de ce dernier étant légèrement supérieur au diamètre externe de la collerette susdite et inférieur au diamètre externe de l'élément élastique considéré dans la position qu'il occupe lorsqu'il est au repos dans la rainure précitée, ce dernier diamètre étant légèrement inférieur au diamètre interne de la partie de l'évidement comprise entre le fond de ce dernier et l'épaulement précité.

Suivant un mode de réalisation avantageux du dispositif suivant l'invention, l'extrémité libre du goujon et/ou l'extrémité de l'écrou tournée vers le fond de l'évidement précité comprennent des moyens agencés pour aligner automatiquement l'axe du goujon et l'axe de l'écrou.

Suivant une forme de réalisation particulièrement avantageuse du dispositif suivant l'invention, les moyens susdits agencés pour aligner les axes du goujon et de l'écrou comprennent, à partir de l'extrémité libre du goujon et entre cette dernière et la partie filetée dudit goujon, une partie tronconique droite, coaxiale au filet du goujon, dont la petite base constitue l'extrémité proprement dite du goujon et dont la grande base a un diamètre légèrement inférieur au diamètre interne du filet de l'écrou et une partie cylindrique, coaxiale au filet du goujon, dont le diamètre est, d'une part, égal au diamètre de la grande base de la partie tronconique susdite et, d'autre part, légèrement inférieur au diamètre interne du filet de l'écrou.

D'autres détails et particularités de l'invention ressortiront de la description des dessins annexés au présent mémoire et qui représentent, à titre d'exemples non limitatifs, deux formes de réalisation particulières du dispositif de fixation suivant l'invention.

La figure 1 est une vue en élévation et en coupe, avec brisures partielles, du dispositif de fixation suivant l'invention, les pièces susdites, l'élément fileté et l'écrou étant représentés en position non assemblée.

La figure 2 est une vue analogue à la figure 1, qui montre les pièces en cours d'assemblage avec l'écrou disposé dans l'évidement précité.

La figure 3 est une vue analogue à la figure 2, qui montre les pièces en cours d'assemblage, avec l'écrou, en position non serrée, en appui sur l'extrémité de l'élément fileté.

La figure 4 est une vue qui est analogue aux figures précédentes et qui représente les pièces en position assemblée avec l'écrou serré.

Les figures 5 et 6 sont des vues analogues aux figures 3 et 4 illustrant une forme de réalisation du dispositif de fixation suivant l'invention, qui est différente de celle qui est représentée aux figures 1 à 4.

Dans les différentes figures, les mêmes notations de référence désignent des éléments identiques ou analogues.

Le dispositif suivant l'invention et illustré aux dessins est destiné à la fixation sur une première pièce 1, à laquelle est associé, par une de ses extrémités 2, au moins un élément fileté 3, d'au moins une seconde pièce 4 présentant une ouverture 5 destinée à livrer passage à l'extrémité libre 6 de l'élément 3. Celui-ci, constitué par exemple par un goujon 7, peut être libre par rapport à la pièce 1 mais est avantageusement, lorsque la configuration, le conditionnement et/ou le transport de l'ensemble pièce 1 et goujon 7 le permettent, fixé à ladite pièce 1, ce qui a pour effet de rendre plus aisé et plus rapide, l'assemblage de la pièce 4 à la pièce 1. Le dispositif comprend, pour l'assemblage susdit, un écrou 8 agencé pour prendre appui sur la pièce 4 et coopérer avec l'extrémité 6 du goujon de manière à, lorsqu'il est serré, appliquer les pièces 1 et 4 l'une contre l'autre pour assurer leur immobilisation.Suivant l'invention, la pièce 4 présente un évidement 9 qui est coaxial à l'ouverture précitée 5 et qui est ménagé, sur une partie de son épaisseur, à partir de sa face 10 opposée à celle qui entre en contact avec la pièce 1 lorsque l'écrou 8 est serré et qu'il s'appuie sur le fond 11 de l'évidement. La profondeur de cet évidement 9 est déterminée pour que l'extrémité 6 du goujon 7 soit située dans l'évidement quand les pièces 1 et 4 sont rapprochées l'une de l'autre et pour que l'écrou 8 soit au moins partiellement logé dans l'évidement, quelle que soit sa position serrée ou déserrée. La section dudit évidement, prise perpendiculairement à son axe, est telle que l'écrou 8 peut y tourner librement autour de son axe. Suivant l'invention, le dispositif comprend également des moyens 12 agencés, d'une part, pour maintenir l'écrou prisonnier de l'évidement 9 lorsqu'il est désserré et qu'il est dégagé du goujon 7 et, d'autre part, pour maintenir l'écrou sensiblement coaxial à l'ouverture 5 lorsque celui-ci occupe cette dernière position.

Comme montré aux dessins, les moyens 12 susdits, maintenant l'écrou 8 prisonnier de l'évidement 9, comprennent, d'une part, une collerette 14 agencée à l'extrémité 13 de l'écrou, qui est tournée vers le fond 11 de l'évidement, et dans laquelle est ménagée une rainure périphérique circulaire 15 destinée à recevoir un élément annulaire 16, élastique dans le sens radial, tel qu'un joint torique, ce dernier et la rainure 15 étant agencés pour que le joint torique soit immobilisé dans ladite rainure suivant une direction parallèle à l'axe de l'écrou 9 et fasse saillie à la périphérie de la collerette 14. Ces moyens 12 comprennent, d'autre part, un épaulement annulaire 17 ménagé à l'intérieur de l'évidement 9, à proximité de l'orifice 16' de celui-ci. Le diamètre interne dudit épaulement 17 est légèrement supérieur au diamètre externe de la collerette 14 afin de permettre l'introduction de l'écrou 8 dans l'évidement 9 de la pièce 4, tandis qu'il est inférieur au diamètre externe du joint torique 16, posé dans la rainure 15 et dans sa position de repos et ce, afin de rendre l'écrou prisonnier de la partie 18 de l'évidement comprise entre le fond 11 de celui-ci et l'épaulement 17. Le diamètre externe susdit du joint torique est enfin légèrement inférieur au diamètre interne de cette partie 18 afin de ne pas entraver, dans cette dernière, la rotation de l'écrou 8 autour de son axe et la translation dudit écrou suivant son axe. Pour faciliter l'introduction de l'écrou 8 dans l'évidement 9, en permettant une compression radiale progressive du joint torique 16, l'épaulement 17 présente, à l'orifice de l'évidement 9, un chanfrein 19, tandis que, pour assurer un bon maintien de l'écrou 8 dans ledit évidement, la face 20 de l'épaulement opposée au chanfrein est située sensiblement dans un plan perpendiculaire à l'axe de l'écrou.

Suivant l'invention et pour faciliter et assurer l'engagement précis de l'écrou 8 sur le goujon 7 sans intervention manuelle sur ledit écrou, l'extrémité libre 6 du goujon et/ou l'extrémité 21 de l'écrou 8 tournée vers le fond 11 de l'évidement 9 comprennent des moyens 22 agencés pour aligner automatiquement l'axe du goujon 7 et l'axe de l'écrou 8 à partir du moment où ce dernier entre en contact avec l'extrémité 6 du goujon.

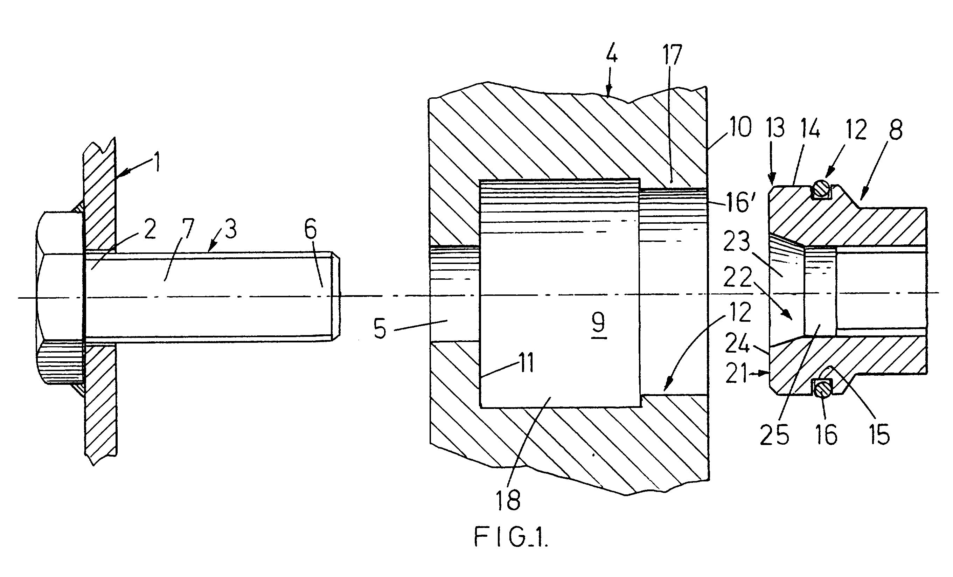

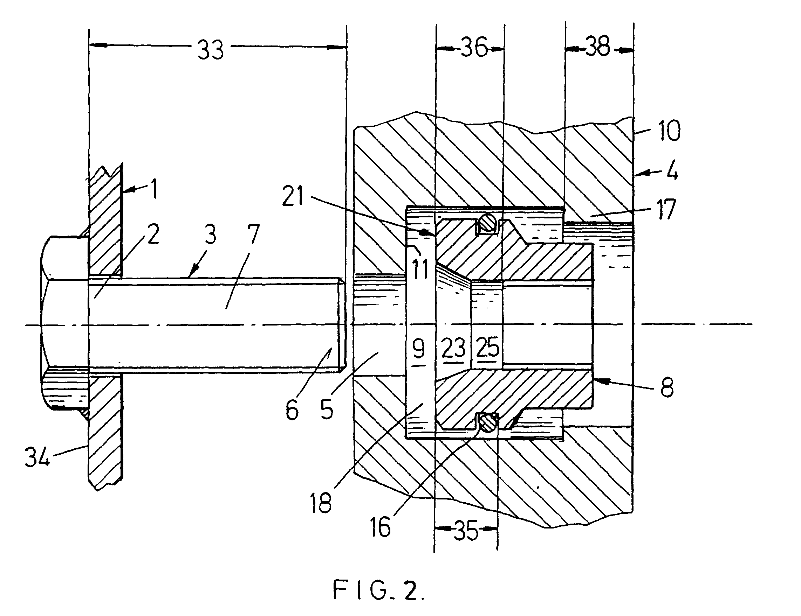

Dans la forme de réalisation du dispositif illustré aux figures 1 à 4, le goujon 7 est fileté sur toute sa longueur et les moyens 22 précités sont uniquement prévus sur l'écrou 8. Ces derniers comprennent, à partir de l'extrémité 21 de l'écrou tournée vers le fond 11 de l'évidement 9, un premier alésage tronconique droit 23, coaxial au filet de l'écrou, dont la grande base coïncide avec la face 24 de l'écrou destinée à coopérer avec le fond 11 de l'évidement 9, dont l'angle au sommet est compris entre 25° et 40° et est de préférence de 30° et dont le diamètre de la petite base est légèrement supérieure au diamètre externe du filet du goujon 7 et un second alésage cylindrique droit 25, coaxial à l'écrou 8, dont le diamètre est égal à celui de la petite base de l'alésage tronconique 23. La somme des dimensions de ces deux alésages prises parallèlement à l'axe de l'écrou est au moins légèrement supérieure à la distance correspondante séparant la face 24 susdite dudit écrou de la face de la rainure 15 précitée qui est la plus éloignée de cette face 24. Dans la forme de réalisation illustrée aux figures 1 à 4, la face 24 de l'écrou est essentiellement plane, tandis que le fond 11 de l'évidement 9 est également plan et perpendiculaire à l'axe de l'ouverture 5 susdite réalisée dans la pièce 4.

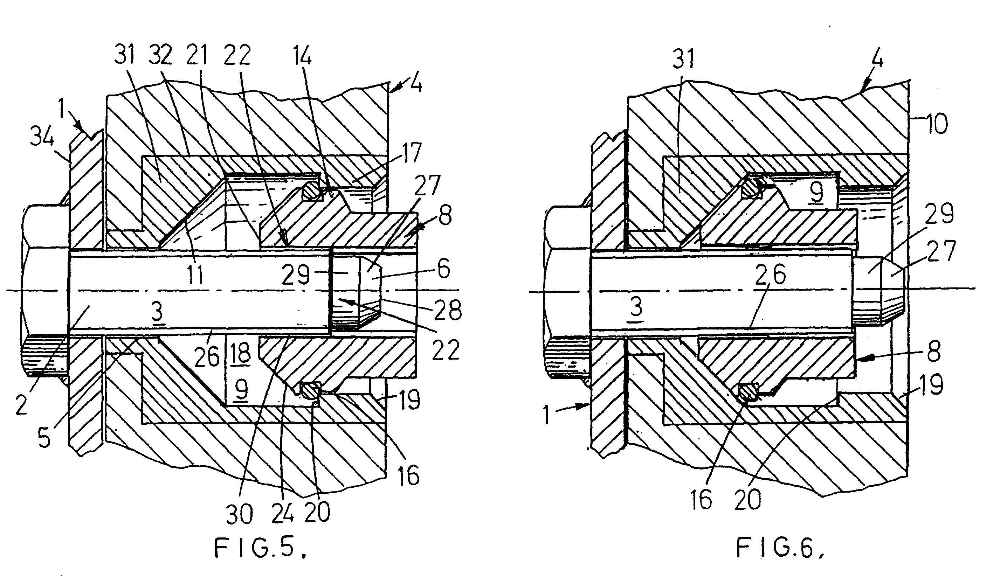

Dans la forme de réalisation du dispositif suivant l'invention, illustrée aux figures 5 et 6, les moyens 22 précités sont prévus sur le goujon 7 et sur l'écrou 8.

Au niveau du goujon, ces moyens 22 comprennent, à partir de l'extrémité libre du goujon 7 et entre cette dernière et la partie filetée 26 du goujon, une partie tronconique droite 27, coaxiale au filet du goujon, dont la petite base 28 constitue l'extrémité proprement dite du goujon et dont la grande base a un diamètre légèrement inférieur au diamètre interne du filet de l'écrou 8 et une partie cylindrique 29, coaxiale au filet du goujon, dont le diamètre est, d'une part, égal au diamètre de la grande base de la partie tronconique 27 et, d'autre part, légèrement inférieur au diamètre interne du filet de l'écrou 8. L'angle au sommet de la partie tronconique 27 est compris entre 25° et 40° et est avantageusement de l'ordre de 30°.

Au niveau de l'écrou 8, les moyens 22 susdits sont consititués par un alésage cylindrique 30 coaxial au filet de l'écrou 8 et réalisé à partir de la face 24 de ce dernier. Le diamètre de cet alésage 30 est légèrement supérieur au diamètre externe du filet du goujon 7, tandis que sa dimension, prise parallèlement à l'axe de l'écrou 8, est supérieure à la dimension correspondante de la partie cylindrique 29 précitée dudit goujon.

Dans les formes de réalisation précitées, l'alésage tronconique 23 de l'écrou 8 et la partie tronconique 27 du goujon 7 peuvent être remplacés, suivant l'invention, par des surfaces sphériques dont les centres sont situés respectivement sur l'axe de l'écrou et l'axe du goujon.

Suivant l'invention et comme montré aux figures 5 et 6, le fond 11 de l'évidement 9 est avantageusement en forme de tronc de cône droit dont l'axe est confondu avec l'axe de l'ouverture 5 susdite et dont la petite base est sensiblement confondue avec cette dernière. L'angle au sommet de ce tronc de cône, qui peut être compris entre 90° et 130°, est avantageusement de l'ordre de 120°. La face 24 de l'écrou est, dans ce cas, également en forme de tronc de cône droit, coaxial à l'écrou et d'angle au sommet avantageusement légèrement supérieur à l'angle au sommet du fond 11 de l'évidement, de sorte que, lorsque le fond 11 et la face 24 susdite s'usent, le serrage de l'écrou tend à augmenter la surface d'appui vers les diamètres plus petits. Ce profil donné audit fond 11 et à ladite face 24 contribue à la réalisation de l'assemblage automatique des pièces 1 et 4 avec un grand degré de précision et ce, même après de nombreuses opérations de démontage et d'assemblage. On pourrait également, suivant l'invention, et pour atteindre le même but, prévoir que ledit fond 11 et ladite face 24 se présentent sous une forme sphérique.

Pour un assemblage statique et plus particulièrement pour un assemblage en mouvement, il est intéressant, pour des raisons de sécurité, d'éviter les aspérités. C'est pourquoi, suivant l'invention, la longueur du goujon 7, la longueur de l'écrou 8 et la profondeur de l'évidement 9 de la pièce 4 sont déterminées de manière à ce que, lorsque l'assemblage est réalisé, l'extrémité libre 6 du goujon et l'écrou 8 soient totalement situés dans cet évidement 9. Ce point de sécurité est important lorsque le dispositif de fixation suivant l'invention est utilisé pour le montage des roues d'un véhicule, car il évite toute dégradation des goujons et écrous lorsque les roues heurtent des obstacles. En outre, il vient encore renforcer la sécurité qui résulte du maintien d'un écrou désserré dans son logement 9 en empêchant cet écrou de se transformer en un dangereux projectile.

Comme montré aux figures 5 et 6, l'évidement 9 susdit peut avantageusement, soit pour des raisons de structure, soit pour des raisons de fabrication, être réalisé dans une pièce rapportée 31 qui est logée et fixée dans un alésage 32 pratiqué dans la pièce 4.

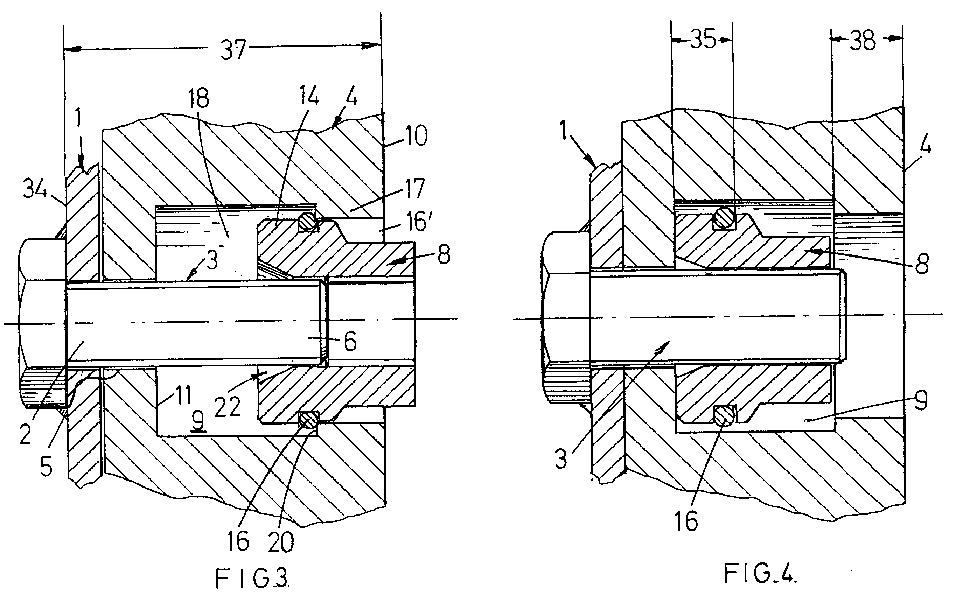

Pour que l'écrou 8 s'engage de manière certaine sur le goujon 7, il est avantageux que le joint torique 16 soit en légère compression sur la face 20 de l'épaulement 17 précité lorsque les pièces 1 et 4 sont en contact (voir figures 3 et 5). Pour obtenir ce résultat, il faut que la distance 33, augmentée de la distance 35 et diminuée de la distance 36, soit au moins égale à la dimension 37 diminuée de la dimension 38, la différence existant entre ces dimensions étant compensée par le coulissement de la pièce 4 sur le goujon 7.

Lorsque les pièces 1 et 4 sont assemblées à l'aide de plusieurs goujons 7 parallèles et de longueurs égales, il faut que la distance 33 augmentée de la distance 35 et diminuée de la distance 36 soit, dans une forme de réalisation préférée, légèrement supérieure, de l'ordre de la déformation possible en compression du fil du joint torique 16, à la dimension 37 diminuée de la dimension 38. Toutefois, on obtiendrait un bon résultat s'il y avait égalité entre ces distances.

En plus des avantages au niveau de la sécurité déjà évoqués ci-dessus, le dispositif de fixation suivant l'invention présente l'avantage important d'offrir par rapport aux systèmes existants une grande facilité de mise en oeuvre. En effet, si l'on prend comme exemple un dispositif de fixation d'une roue 4 de véhicule comportant cinq écrous pour l'immobiliser sur son moyeu 1, on constate qu'un changement traditionnel de roue nécessite, d'une part, la manipulation de treize éléments différents, à savoir la roue que l'on enlève ainsi que ses cinq écrous de fixation, la roue 4 que l'on replace ainsi que ses cinq écrous et l'appareil de serrage et de désserrage des écrous et, d'autre part, cinq opérations manuelles de mise en place et d'amorçage des écrous lorsque l'on replace la roue. Avec le dispositif de fixation suivant l'invention, le nombre d'éléments manipulés passe de treize à trois, à savoir la roue enlevée, la roue 4 remise en place et l'appareil de serrage des écrous, les cinq opérations manuelles de mise en place des écrous étant éliminées du fait que la pose de la roue sur ses goujons place directement les écrous dans l'axe desdits goujons, avec leurs filets prêts à être correctement engagés.

Sur la plan de la rapidité, qui a une importance capitale lors de compétitions automobiles, il est évident que le nombre restreint de pièces à manipuler lors d'un changement de roue, sans intervention manuelle de pose et d'amorçage d'écrous, réduit de manière considérable, par rapport à la méthode traditionnelle, le temps nécessaire audit changement de roue.

Il doit être entendu que l'invention n'est nullement limitée aux formes de réalisation décrites et que bien des modifications peuvent être apportées à ces dernières sans sortir du cadre du présent brevet.

C'est ainsi que, suivant l'invention, le dispositif de fixation décrit ci-dessus peut être utilisé pour l'assemblage d'un nombre de pièces supérieur à deux, les pièces supplémentaires étant alors disposées entre les pièces 1 et 4 et présentant chacune une ou plusieurs ouvertures 5 pour le passage d'un ou de goujons 7, la longueur de ce ou de ces derniers étant adaptée pour que la ou les extrémités libres du ou des goujons débouchent dans le ou les évidements 9 réalisés dans la pièce 4 lorsque les pièces à assembler sont placées l'une contre l'autre.

Pour permettre l'extraction d'un écrou 8 défectueux de son logement 9, il est avantageux de prévoir, suivant l'invention, un élément 16 qui autorise le passage de ce dernier à travers l'épaulement 17 lorsqu'une pression suffisante est exercée, à l'aide d'un outil approprié introduit à travers l'ouverture 5 réalisée dans la pièce 4.

## Revendications

1. Dispositif de fixation sur une première pièce (1), à laquelle est associé, par une de ses extrémités (2), au moins un élément saillant fileté (3) tel qu'un goujon (7), d'au moins une seconde pièce (4) pourvue d'une ouverture (5) destinée à livrer passage à l'extrémité libre (6) dudit goujon, comprenant un écrou (8) agencé de manière à prendre appui sur la seconde pièce et coopérer avec l'extrémité libre (6) du goujon pour, lorsqu'il est serré, appliquer cette seconde pièce (4) sur la première (1) afin d'immobiliser ces deux pièces l'une par rapport à l'autre, ledit dispositif étant caractérisé en ce que la seconde pièce (4) présente un évidement (9), coaxial à l'ouverture (5) précitée, ménagé, sur une partie de l'épaisseur de cette pièce, à partir de sa face (10) opposée à celle qui est destinée à entrer en contact avec la première pièce (1) lorsque l'écrou (8) est serré et qu'il prend appui sur le fond (11) de l'évidement, la profondeur dudit évidement (9) étant telle que, d'une part, l'extrémité libre (6) du goujon est située dans l'évidement lorsque les deux pièces (1, 4) sont rapprochées l'une de l'autre et, d'autre part, l'écrou est au moins partiellement logé dans l'évidement, la section de ce dernier étant telle que l'écrou (8) peut y tourner librement autour de son axe, des moyens (12) étant prévus pour, d'une part, maintenir l'écrou prisonnier de l'évidement (9) précité lorsqu'il est en position désserrée et qu'il ne coopère plus avec le goujon (7) et, d'autre part, maintenir l'écrou sensiblement coaxial à l'ouverture (5) susdite.

2. Dispositif de fixation suivant la revendication 1, caractérisé en ce que les moyens (12) précités permettant de maintenir l'écrou (8) prisonnier de l'évidement (9) précité comprennent, d'une part et à l'extrémité (13) de l'écrou tournée vers le fond (11) dudit évidement, une collerette (14) dans laquelle est ménagée une rainure périphérique circulaire (15), un élément annulaire (16) élastique dans le sens radial, tel qu'un joint torique, disposé dans ladite rainure (15) et agencé pour être immobilisé dans cette denrière suivant une direction parallèle à l'axe de l'écrou (9) et pour faire saillie à la périphérie de la collerette (14) précitée, et, d'autre part et à l'intérieur de l'évidement (9) susdit, à proximité de l'orifice (16') de celui-ci, un épaulement annulaire (17), le diamètre interne de ce dernier étant légèrement supérieur au diamètre externe de la collerette (14) susdite et inférieur au diamètre externe de l'élément élastique (16) considéré dans la position qu'il occupe lorsqu'il est au repos dans la rainure (15) précitée, ce dernier diamètre étant légèrement inférieur au diamètre interne de la partie (18) de l'évidement comprise entre le fond (11) de ce dernier et l'épaulement (17) précité.

3. Dispositif de fixation suivant l'une ou l'autre des revendications 1 et 2, caractérisé en ce que l'extrémité libre (6) du goujon et/ou l'extrémité (21) de l'écrou (8) tournée vers le fond (11) de l'évidement (9) précité comprennent des moyens (22) agencés pour aligner automatiquement l'axe du goujon (7) et l'axe de l'écrou (8).

4. Dispositif de fixation suivant la revendication 3, caractérisé en ce que les moyens (22) susdits agencés pour aligner les axes du goujon (7) et de l'écrou (8) comprennent, à partir de l'extrémité libre (6) du goujon (7) et entre cette dernière et la partie filetée (26) dudit goujon, une partie tronconique (27) droite, coaxiale au filet du goujon, dont la petite base (28) constitue l'extrémité proprement dite du goujon et dont la grande base a un diamètre légèrement inférieur au diamètre interne du filet de l'écrou (8) et une partie (29) cylindrique, coaxiale au filet du goujon, dont le diamètre est, d'une part, égal au diamètre de la grande base de la partie tronconique (27) susdite et, d'autre part, légèrement inférieur au diamètre interne du filet de l'écrou (8).

5. Dispositif de fixation suivant la revendication 4, caractérisé en ce que l'angle au sommet de la partie tronconique droite (27) précitée, présentée par l'extrémité libre (6) du goujon (7), est compris entre 25° et 40°.

6. Dispositif de fixation suivant la revendication 3, caractérisé en ce que les moyens susdits (22) agencés pour aligner les axes du goujon (7) et de l'écrou (8) comprennent, à partir de l'extrémité libre (6) du goujon (7) et entre cette dernière et la partie filetée (26) dudit goujon, une partie soit hémisphérique, soit en forme de calotte sphérique dont le centre est situé sur l'axe du filet du goujon (7) et qui se raccorde sur une partie cylindrique (29), coaxiale au filet du goujon, dont le diamètre est légèrement inférieur au diamètre interne du filet de l'écrou (8).

7. Dispositif de fixation suivant l'une quelconque des revendications 4 à 6, caractérisé en ce que les moyens susdits (22) agencés pour aligner l'axe du goujon et l'axe de l'écrou, comprennent, à partir de l'extrémité (21) de l'écrou tournée vers le fond (11) de l'évidemment (9) précité, un alésage cylindrique (30) coaxial au filet de l'écrou, le diamètre de cet alésage (30) étant légèrement supérieur au diamètre externe du filet du goujon (7), la profondeur dudit alésage étant supérieure à la dimension de la partie cylindrique précitée au goujon, prise parallèlement à l'axe de ce dernier.

8. Dispositif de fixation suivant la revendication 3, caractérisé en ce que l'extrémité libre (6) du goujon (7) est filetée sur toute sa longueur, les moyens (22) agencés pour aligner les axes du goujon (7) et de l'écrou (8) comprennent, sur l'écrou et à partir de son extrémité (21) tournée vers le fond (11) de l'évidement (9) précité, d'une part, un alésage tronconique droit (23), coaxial au filet de l'écrou (8), dont la grande base coïncide avec la face (24) de l'écrou destinée à coopérer avec le fond (11) susdit de l'évidement et dont l'angle au sommet est compris entre 25° et 40°, le diamètre de la petite base de l'alésage tronconique (23) étant légèrement supérieur au diamètre externe du filet du goujon et, d'autre part, un alésage cylindrique droit (25), coaxial au filet de l'écrou (8), dont le diamètre est égal à celui de la petite base de l'alésage tronconique (23).

9. Dispositif de fixation suivant l'une quelconque des revendications 1 à 8, caractérisé en ce que le fond (11) de l'évidement (9) susdit est en forme de tronc ou cône droit dont l'axe est confondu avec l'axe de l'ouverture (5) précitée et dont la petite base est confondue avec ladite ouverture, l'angle au sommet dudit tronc de cône étant compris entre 90° et 130°, la face (24) de l'écrou (8) destinée à coopérer avec le fond (11) de l'évidement étant également en forme de tronc de cône droit, d'axe confondu avec l'axe de l'écrou et d'angle au sommet compris entre 92° et 132°.

10. Dispositif de fixation suivant l'une quelconque des revendications 1 à 8, caractérisé en ce que le fond (11) de l'évidement (9) a une forme sphérique, tout comme la face (24) de l'écrou (8) destinée à coopérer avec ce fond (11).

11. Dispositif de fixation suivant l'une quelconque des revendications 1 à 10, caractérisé en ce que la longueur du goujon (7), la longueur de l'écrou (8) et la profondeur de l'évidement (9) sont déterminées pour que, lorsque les deux pièces (1, 4) susdites sont appliquées l'une sur l'autre et lorsque l'écrou (8) est serré, ces goujon et écrou soient entièrement situés à l'intérieur dudit évidement (9).

12. Dispositif de fixation suivant l'une quelconque des revendications 2 à 11, caractérisé en ce que l'élément annulaire élastique (16) précité est agencé de manière à autoriser le dégagement de l'écrou (8) de l'évidement (9), lorsqu'une pression est exercée sur l'écrou, suivant son axe et à partir de sa face tournée vers le fond de l'évidement, à travers l'ouverture (5) précitée débouchant dans ledit évidement.

13. Dispositif de fixation suivant l'une quelconque des revendications 1 à 12, caractérisé en ce que l'évidement (9) précité est réalisé dans une pièce rapportée (31) qui est logée, au moins partiellement, dans la seconde pièce (4) précitée et qui est fixée à cette dernière.

14. Dispositif de fixation suivant l'une quelconque des revendications 1 à 13, caractérisé en ce que l'élément saillant fileté (3) susdit est fixé à la première pièce (1) précitée.

15. Dispositif de fixation suivant l'une quelconque des revendications 2 à 14, caractérisé en ce que la distance (33), prise parallèlement à l'axe des goujons, qui sépare la face (34) de la première pièce (1), opposée à celle qui est destinée à entrer en contact avec la seconde pièce (4), de l'entrée du filet située à l'extrémité libre du goujon, augmentée de la distance (35) qui sépare l'extrémité (21) de l'écrou (8), tournée vers le fond (11) de l'évidement, de la paroi de la rainure périphérique (15) précitée qui est la plus éloignée de cette extrémité et diminuée de la distance (36), prise parallèlement à l'axe de l'écrou (8), qui sépare la face (24) de l'écrou (8) tournée vers le fond (11) de l'évidement précité de l'entrée correspondante du filet de l'écrou, doit être au moins égale à la dimension (37) des deux pièces (1, 4) susdites réunies, prises parallèlement à l'axe de l'ouverture (5) précitée, diminuée de la dimension (38) de l'épaulement annulaire (17) susdit, prise parallèlement à l'axe de ladite ouverture (5).

16. Dispositif de fixation suivant l'une quelconque des revendications 2 à 14, caractérisé en ce que, lorsque les deux pièces (1,4) précitées sont assemblées par plusieurs goujons (7) dont les axes sont parallèles et dont les longueurs sont égales, la distance (33), prise parallèlement à l'axe du goujon (7), qui sépare la face (34) de la première pièce (1), opposée à celle qui est destinée à entrer en contact avec la seconde pièce (4), de l'entrée du filet située à l'extrémité libre (6) du goujon (7), augmentée de la distance (35) qui sépare l'extrémité (21) de l'écrou (8), tournée vers le fond (11) de l'évidement, de la paroi de la rainure périphérique (15) susdite qui est la plus éloignée de cette extrémité (21) et diminuée de la distance (36), prise parallèlement à l'axe de l'écrou (8), qui sépare la face (24) dudit écrou tournée vers le fond de l'évidement (9) susdit de l'entrée correspondante du filet de l'écrou, est sensiblement égale à la dimension (37) des deux pièces (1, 4) susdites réunies, prise parallèlement à l'axe de l'ouverture (5) précitée, diminuée de la dimension (38) de l'épaulement annulaire (17) précité, prise parallèlement audit axe de l'ouverture (5).
